Europäisches Patentamt

European Patent Office

Office européen des brevets

(19)

(11) Publication number: **0 052 586**
A2

## (12) EUROPEAN PATENT APPLICATION

(21) Application number: 81850203.1

(22) Date of filing: 30.10.81

(51) Int. Cl.³: **B 60 B 29/00**

(30) Priority: 18.11.80 SE 8006231

(43) Date of publication of application:
26.05.82 Bulletin 82/21

(84) Designated Contracting States:
DE FR GB IT NL

(71) Applicant: **Kristerson, Olof**
**Greviedal**
**S-235 00 Vellinge(SE)**

(71) Applicant: **Sjövall, Stig**
**Gränsgatan 18**
**S-244 00 Kävlinge(SE)**

(72) Inventor: **Kristerson, Olof**
**Greviedal**
**S-235 00 Vellinge(SE)**

(72) Inventor: **Sjövall, Stig**
**Gränsgatan 18**
**S-244 00 Kävlinge(SE)**

(74) Representative: **Ström, Tore et al,**
**c/o Ström & Gulliksson AB Rundelsgatan 14**
**S-211 36 Malmö(SE)**

(54) Device for facilitating the mounting and dismounting of large vehicle wheels.

(57) The invention relates to an accessory for fitting and removing large vehicle wheels, e.g. pneumatic tyred wheels for tractors, trucks etc.

The arrangement consists of a preferably U-shaped horizontal frame (1) mounted on wheels which is designed to be placed close to a vehicle wheel (5), parallel with the side of the wheel and with the free limbs (2, 3) of the frame (1) projecting in front of and behind the wheel, respectively. The frame carries a vertical pedestal (7) with an arm (8), hinge-mounted at the top of the pedestal which by means of a hydraulic cylinder (18) can be swivelled parallel with the side of the vehicle wheel. At its free end the arm (8) carries a supporting roller (9) which is rotatable around an axis of rotation parallel with the axis of the wheel (5). As a result of the arm (8) being swivelled upwards the supporting roller (9) is made to engage with the rim so as to lift the wheel, which then hangs on the supporting roller (9) and at the bottom the tyre side of the wheel rests against two supporting rollers (19) provided on the frame.

The arrangement permits a single person to lift large vehicle wheels, to move the wheel on a horizontal surface to a vehicle which has been elevated by means of a jack, and then with little effort by twisting the wheel to align the bolt holes centrally with the bolts and then to fix the wheel to the hub.

Fig 1

EP 0 052 586 A2

ARRANGEMENT FOR FACILITATING THE FITTING AND REMOVAL
OF LARGE VEHICLE WHEELS

The present invention relates to an arrangement for facilitating the fitting and removal of large vehicle wheels, e.g. rim-mounted pneumatic tyred wheels for tractors, trucks, loading machines etc.

The fitting and removal of large vehicle wheels is a difficult, time-consuming and risky working operation. The currently-employed wheel dimensions, with diameters of the order of 2 m and weights of 300 - 400 kg, have rendered it necessary to employ several persons simultaneously during manual wheel changing. Certain operations particularly, e.g. the twisting of the wheel around its own axis of rotation which is usually required in order to orientate the bolt holes in the rim with the centre of the corresponding hub bolts, cannot be performed manually by a single person.

To prevent accidents as far as possible when handling such large and bulky wheels extreme care must be taken, and this renders manual wheel changing time-consuming and involves unnecessarily long down-times for the vehicle.

With a view to simplifying the difficult operation involved in manual fitting and removal of large vehicle wheels, various different embodiments of mechanical accessories have been proposed.

Such a known accessory comprises a wheel-supported frame with a vertical pedestal having two projecting limbs which, when the accessory is placed in position close to the side of the vehicle wheel, project with one limb in front and the second at the rear of the wheel. By enforced vertical displacement of the limbs these are made to engage with the wheel whilst at the same time lifting this from the sub-surface. During this

the wheel is held at the top by means of a gripping device arranged on the pedestal so that it engages with the wheel.

Another known accessory for fitting and removal of large vehicle wheels, which also comprises a wheel-supported frame with a vertical pedestal, carries the vehicle wheel which hangs in a gripping device arranged at the top of the pedestal, whereby at the bottom the wheel rests against a support arranged on the frame.

Apart from the fact that the known arrangements mentioned above are complicated in design, they suffer from one important disadvantage, in that the arrangements render it impossible or difficult to rotate the wheel around its own axis of rotation, which is essential in most cases to permit alignment of the bolt holes in the rim so that they correspond exactly with the corresponding hub bolts or other fastening devices on the rim plate in those cases where this is firmly connected with the hub.

The aim of the present invention is to provide an arrangement for simplifying the fitting and removal of large vehicle wheels, which makes it possible for a single person to move a vehicle wheel, which is supported by the arrangement, easily sideways and lengthwise, to align the wheel vertically in the centre of bolts or other fixing devices, to complete the alignment by twisting the wheel around its own axis so that bolt holes and the like in the rim are brought into exact alignment with corresponding bolts or other fixing arrangements. A further objective of the invention is to provide an accessory which is simple in design, provides good accessibility for the operator whilst performing the working operations, and which provides satisfactory safety during performance of these operations.

The objective outlined above is achieved in accordance with the present invention by an arrangement in accordance with the following patent claims.

The invention will be described in the following in connection with one embodiment and with reference to the appended diagrams.

FIG 1 shows a perspective view of an arrangement in accordance with the invention with a vehicle wheel supported in the arrangement.

FIG 2 shows a view of the arrangement seen from the rear.

FIG 3 is a section at A-A in FIG 2.

FIG 4 is a partial view illustrating a modified embodiment.

FIG 5 is a section B-B in FIG 4.

FIG 6 is a partial view illustrating yet a further modified embodiment.

FIG 7 is a section C-C in FIG 6.

The arrangement shown in the diagrams consists of an essentially horizontal, U-shaped rigid frame 1 having two free limbs 2 and 3 which are parallel with each other, and which are rigidly connected with each other by means of the frame girder 4. The frame 1 is designed so that the limbs 2 and 3 can straddle a vehicle wheel 5 resting on the sub-surface, where the side of the wheel faces towards and is essentially parallel with the frame girder 4. The distance between the limbs 2 and 3 of frame 1 is hence adapted to suit the largest wheel dimension for which the arrangement is to be employed. The frame 1 is supported on the horizontal sub-surface by means of four wheels or rollers, preferably four swivel rollers 6, which can swivel around vertical axes so that the frame 1 can easily be moved on the sub-surface in any required direction.

On one side frame 1 carries a vertical pedestal 7

4

which at the top is hinge-connected with an arm 8 which can swivel in a plane parallel with the frame girder 4. At its free end the arm 8 carries a supporting roller 9 which can rotate around an axis which is parallel with the axis of rotation of the vehicle wheel 5. The supporting roller 9 which is preferably mounted in ball bearings, is mounted at the end of a bar 10 which extends at right angles to the arm 8 and which can be displaced inside a sleeve 11 welded into the arm 8 and which projects a certain distance on either side of the said arm. A through hole 12 of the same dimension as a series of holes 13 in the bar 10 is provided in each of the sections of the sleeve 11 which project on either side of the arm 8. By means of a locking pin 14 which is introduced through the hole 12 on one side of the sleeve 11 and any of the holes 13 in the bar 10, the supporting roller 9 can thus be fixed at a distance from the arm 8 selected in accordance with the series of holes.

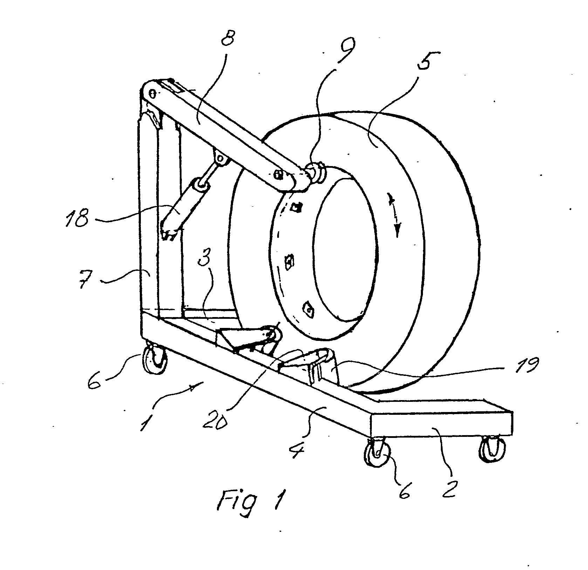

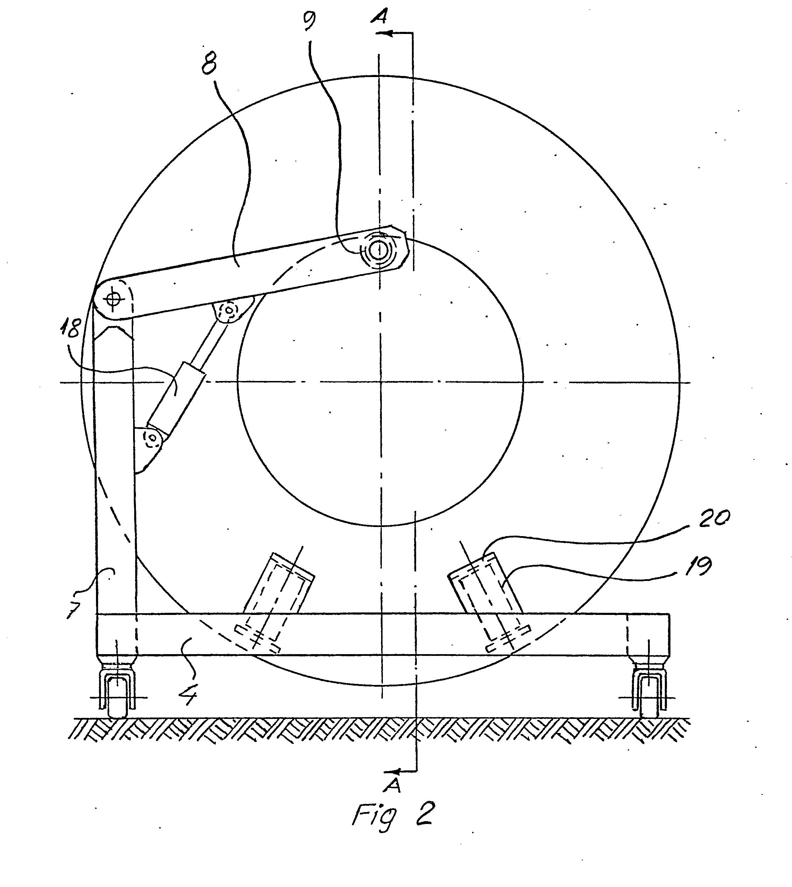

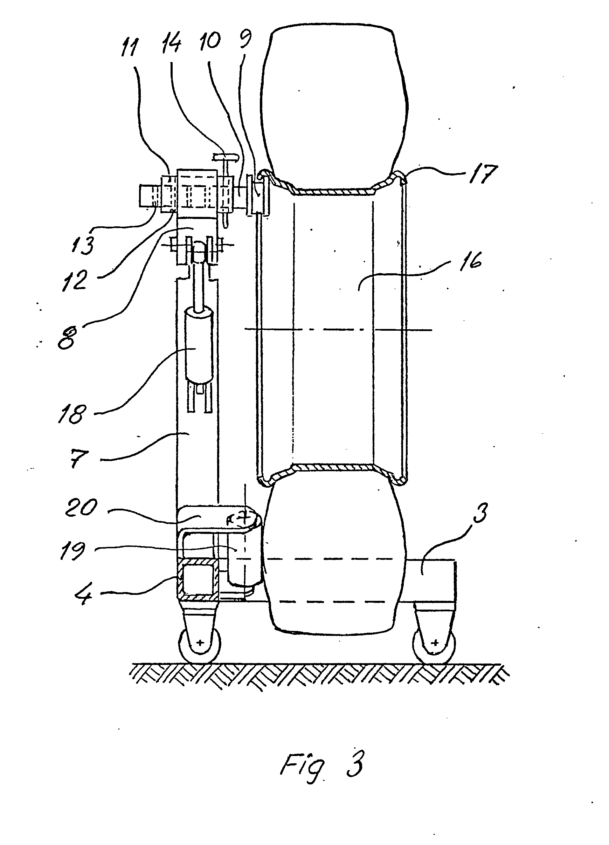

The supporting roller 9 is provided with two flanges 15 so that a groove is formed between the flanges. The groove in the supporting roller 9 is designed so as to interact with a rail 17 arranged on the rim 16 of the vehicle wheel 5 and which is centered around the axis of rotation of the rim, and which in the example shown in FIGS 1 - 3 is formed by the edge of the rim which is bent over towards the wheel axis. Thus, when engaged with the rail 17 the supporting roller 9 prevents axial movement of the rim 16 and thus of the vehicle wheel 5 at the point of engagement of the roller 9 with the rim.

The arm 8 can swivel in the vertical plane by means of a device exercising force, e.g. a hydraulic cylinder or a jack 18. When a medium under pressure is supplied to the hydraulic cylinder 18, the arm 8 is made to swivel around its swivel axis on the pedestal 7. When the supporting roller 9 is in engagement with the rim 16, this swivelling movement causes the vehicle wheel to be lifted from its sub-surface. To support the vehicle wheel laterally during this two supporting rollers 19 are mounted in holders 20 on the frame girder 4. The axes of rotation of the rollers 19 extend at right angles to the axis of the vehicle wheel and form an angle with each other. Preferably, the angle formed by the supporting rollers in respect of a vertical plane of symmetry to the frame is about $20^{\circ}$.

When a vehicle wheel 5 is to be fitted, the accessory is placed in position close to the wheel with the limbs 2 and 3 in front of respectively behind the wheel 5 and with the supporting rollers 19 in contact with the tyre side of the vehicle wheel. The arm 8 is set in such a position that the supporting roller 9 located on the bar 10 is within the free space in the rim 16 with the groove on the supporting roller in the centre of the rail 17 in the rim. By supplying medium under pressure to the hydraulic cylinder 18, using a hydraulic hand pump which is not illustrated, the arm 8 is made to swivel until its supporting roller 9 has engaged with the rail 17 on the rim 16. The swivel movement of the arm continues until the vehicle wheel 5 is raised from the sub-surface. As a result the wheel 5 is raised whilst being suspended stably on the supporting roller 9 and with the smooth tyre side of the wheel resting against the two supporting rollers 19.

The accessory is then moved, rolling on the sub-surface, up to the vehicle on which the wheel is to be fitted. The alignment of the wheel 5 laterally in relation to the hub is undertaken by moving the frame to the required extent on the sub-surface. Vertical alignment is accomplished by raising or lowering the arm 8, and thus the wheel 5 which hangs in the supporting roller 9. After the wheel has been centered in relation to the centre of
the hub or rim plate, the wheel which hangs on supporting
roller 9 is rotated to the necessary extent so that the
bolt holes in the rim correspond with the hub bolts,
after which the rim nuts are screwed up tight. Since the
ball-bearing-mounted supporting roller 9 runs easily
against the rail 19 in the rim 16, twisting of the wheel
requires only a small amount of force and can be undertaken using one hand. During rotation the centre position
of the wheel is maintained, because the rail 17 is centered around the axis of rotation of the wheel. Thanks
to the fact that the pedestal 7 is arranged on one side
of the frame 1, the area around the rim is left free, so
that fitting operations can be executed with the maximum
possible accessibility. Throughout the entire working
operation the vehicle wheel rests stably on the supporting roller 9 with the tyre side resting against the supporting rollers 19 on the frame girder 4. After the rim
nuts have been tightened up, the pressure in the hydraulic cylinder 18 is released, so that the arm 8 swivels
downwards and the supporting roller 9 is disengaged from
the rail 17 on the rim 16, after which the accessory is
rolled away from under the vehicle.

When moving a vehicle wheel, the operations described
above are performed appropriately, but in the reverse
order.

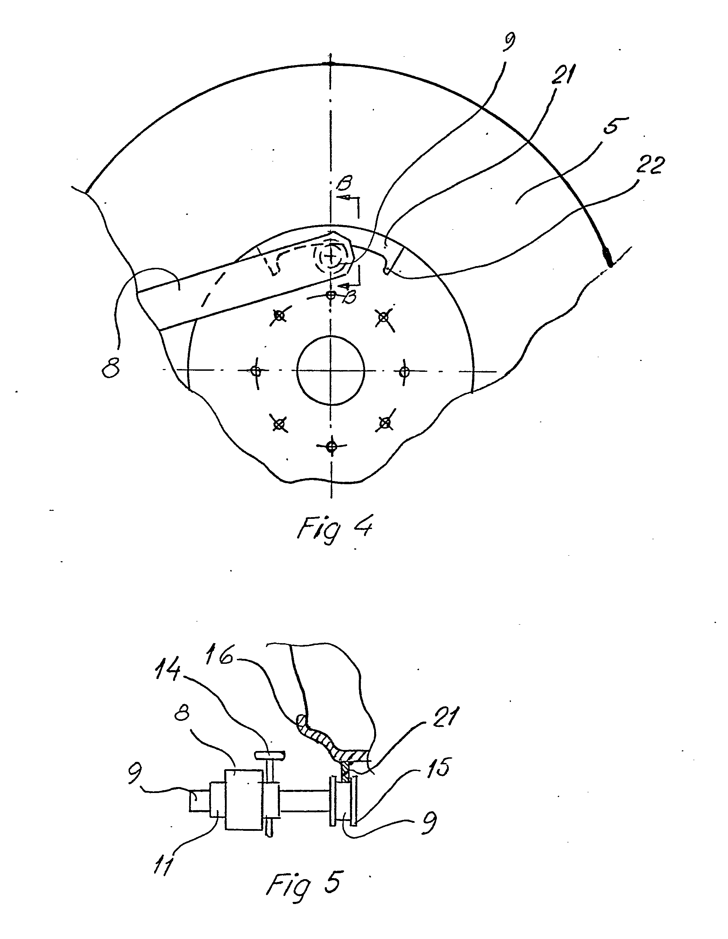

In the embodiment described above the rim of the
vehicle wheel has been assumed to be of the type where
the edges of the rim have already, during manufacture,
been bent over towards the centre of rotation of the
wheel so that a rail centered around the axis of rotation of the rim is obtained, this being used in the manner described above as a holding point so as to provide
permanent engagement between the supporting roller and
the vehicle wheel. Other types of rims available on the market are so designed that the said rail 17 is lacking. To be able to employ the arrangement in accordance with the present invention for fitting and removal of wheels with rims of the latter-mentioned type, the rim can be provided with a holding point, e.g. by welding on or fastening in some other way, a flange or rail 21 to the rim, as illustrated in FIGS 4 and 5. The flange or rail 21 does not need to extend around the entire periphery of the rim 16. It is sufficient if the arc-shaped rail 21 covers so large a portion of the circumference of the rim 16 that the vehicle wheel can be twisted through so large an angle that the bolt holes in the rim are aligned centrally with the hub bolts in the wheel hub. The rail 21 should preferably be provided with a stop lug 22 at each end so as to prevent the supporting roller 9 from rolling off the rail 21. With this arrangement the rail 21 is placed further within the rim 16 than is the case when the holding point comprises the bent over edge of the rim. As a result of the fact that the bar 10 which carries the supporting roller 9 can be displaced and is adjustable in various projection positions, this facilitates simple adjustment of the projecting length which is required to locate the supporting roller 9 in a central position in respect of the rail 21 when the location of the latter varies.

The adjustment of the supporting roller 9 in the axial direction can as an alternative be undertaken infinitely-variably by arranging for the projection of the bar 10 to be brought about instead by means of a mechanical or hydraulic force device, e.g. a screw arrangement. The bar 10 can for example be designed as a screw which at one end carries the supporting roller 9 whilst its opposite end is provided with a crank for rotating the screw in the bearing provided with a suitable thread in the arm 8.

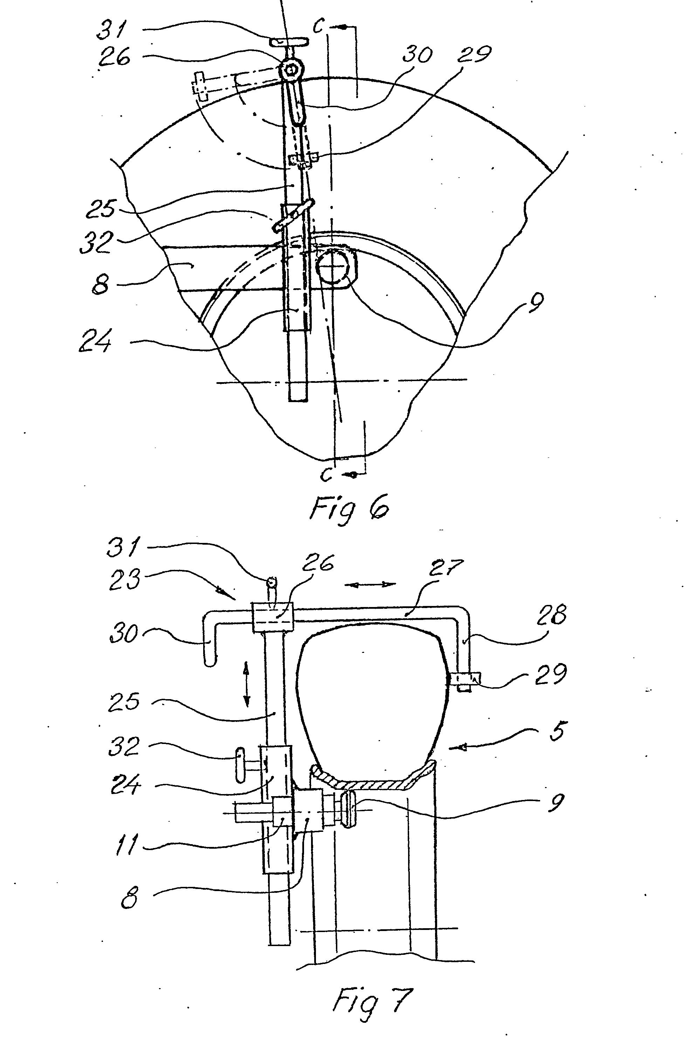

FIGS 6 and 7 show a further embodiment which has been modified so as to ensure absolutely safe fitting and removal of large vehicle wheels, regardless of whether the rim is provided with a holding point as described in conjunction with FIGS 1 - 5, or if the rim has no holding point whatever.

The modified arrangement differs from the embodiments previously described in that a holding point 23 is arranged on the arm 8 instead of in the rim, whereby the holding point arrangement 23 can be made to engage with the side of the tyre which faces away from the arm 8, thus preventing the wheel 5 from sliding off the supporting roller 9. The holding point arrangement 23 consists of a sleeve 24 with square cross section, e.g. a square tube, welded onto the arm in the vicinity of the bearing sleeve 11 for the supporting roller 9, and extending vertically at right angles to the arm 8. A square bar 25, preferably a square tube, the upper end of which has a bearing sleeve 26 gripped at right angles to the bar 25 is arranged in the sleeve 24 and capable of vertical movement. A round bar 27 which can move in a direction parallel to the axis of rotation of the wheel 5, i.e. transverse to the wheel, is arranged in the bearing sleeve 26. The round bar 27 can also rotate around its own axis in the bearing sleeve 26 and its far end has been bent over about 90$^{o}$ towards the axis of rotation of the wheel 5. A roller 29, which can easily rotate, preferably consisting of a ball bearing, is mounted at the end of the bent-over portion 28. By displacing and twisting the round bar 27 in the bearing sleeve 26 the roller 29 can be made to rest against the outside of the tyre. To facilitate the displacement and turning movement, the round bar is provided with a handle 30. Both the bearing sleeve 26 and the sleeve 24 are provided with detent screws 31, 32 so that the holding point arrangement 23, after the necessary vertical and lateral adjustment, can be locked into the set position. The length of the bar 25 and round bar 27 are selected so that the necessary adjustments are possible for all wheel dimensions for which the accessory is designed to be used.

When a wheel is to be placed in the accessory, the holding point arrangement 23 is so adjusted that the round bar 27 with roller 29 does not touch the tyre when the supporting roller is placed in the engaged position with the rim. Then the round bar 27 is twisted so that its bent-over portion 28 faces the axis of rotation of the wheel, after which roller 29 is made to rest against the outside of the tyre.

After the holding point arrangement 23 has been fixed in the set position by means of the detent screws 31, 32 the wheel 5 is lifted by means of the supporting roller 9 in the manner described previously. The accessory can then be moved along the sub-surface with the wheel 5 hanging from the supporting roller 9, during which the holding point arrangement prevents the wheel 5 from sliding off the supporting roller.

The alignment of the wheel 5 in relation to the hub bolts or other fastening devices can then be performed in the manner previously described. After the wheel has been fastened in position the holding point arrangement is adjusted so that the accessory can be freely withdrawn from under the wheel, after the supporting roller 9 has been disengaged from the rim by lowering the arm 8.

In the embodiments shown in FIGS 1 - 5 the supporting roller 9 is provided with two flanges which together with the supporting surfaces of the supporting roller form a circular groove. If the edge of the rim is so designed that a circular, e.g. V-shaped groove is formed in the side of the rim, the supporting roller 9 can be

10

provided with a profile which corresponds to the shape of the rim groove, e.g. V-shaped, whereby the supporting roller 9 is designed without flanges. This form of supporting roller can also be employed with the embodiment shown in FIGS 6 and 7, as shown by FIG 7. Other forms of supporting roller peripheral surface can also be envisaged. Thus, the roller can be designed with a sharp, lip-shaped side or be provided with a friction covering e.g. in the form of one or more O-rings arranged in grooves in the supporting surface of the supporting roller. The supporting roller 9 can be appropriately provided with replaceable supporting rings of different profiles which can be fastened to the hub of the supporting roller by means of a simple screw connection.

1

CLAIMS

1. Arrangement for facilitating the fitting and removal of large vehicle wheels, e.g. rim-mounted pneumatic tyred wheels for tractors, trucks or the like, comprising a frame (1) which can move on an essentially horizontal sub-surface, having two free limbs (2, 3) the said frame (1) supporting a pedestal (7) which is provided with devices for retaining engagement with a vehicle wheel (5) located between the free arms of the frame, c h a r a c t e r i s e d in that the said device for engagement with the wheel (5) comprises a supporting roller (9) which is supported by the pedestal (7) and movable by force in the vertical direction, the said supporting roller being rotatable around an axis essentially parallel with the axis of rotation of the wheel (5) and so arranged that in rolling interaction with the rim it permits rotation of the wheel around its axis of rotation whilst at the same time supporting the wheel.

2. Arrangement as claimed in claim 1, c h a r a c - t e r i s e d in that two supporting rollers (19) for supporting the wheel (5) by contact between the tyre side of the wheel and the said supporting rollers which are transverse relative to the axis of the supporting roller (9) are mounted on the frame.

3. Arrangement as claimed in claim 1 or 2, c h a r a c t e r i s e d in that the supporting roller. (9) is so designed as to interact with a holding point (21) arranged on the rim (16) and prevent axial movement of the wheel at the point of engagement of the supporting roller (9) with the rim.

4. Arrangement as claimed in any of claims 1 - 3, c h a r a c t e r i s e d in that the pedestal (7) is located on the frame (1) at one side and supports an arm (8) which can be swivelled by means of a force device (18) relative to the pedestal, and which in turn carries the said supporting roller (9).

5. Arrangement as claimed in any of claims 1 - 4, c h a r a c t e r i s e d in that the supporting roller (9) is rotatably mounted at the end of a bar (10) which is supported by the said arm (8), and which is displaceable in the axial direction of the supporting roller relative to the arm (8).

6. Arrangement as claimed in claim 5, c h a r a c - t e r i s e d in that the displacement movement of the bar (10) is brought about by means of a screw arrangement.

7. Arrangement as claimed in claim 6, c h a r a c - t e r i s e d in that the bar (10) comprises a screw supported by the arm (8) in a threaded through hole in the arm.

8. Arrangement as claimed in any of claims 3 - 6, c h a r a c t e r i s e d in that the said holding point comprises the side of the rim (16) which is bent over towards the centre axis of the rim.

9. Arrangement as claimed in any of claims 3 - 6, c h a r a c t e r i s e d in that the said holding point comprises a flange (21) fastened into the rim (16).

10. Arrangement as claimed in claim 9, c h a r a c - t e r i s e d in that the said flange (21) extends over only a portion of the circumference of the rim.

Fig 1

Fig 2

Fig. 3

Fig 4

Fig 5

Fig 6

Fig 7